# EUROPEAN PATENT APPLICATION

(11) **EP 4 712 263 A1**
(43) Date of publication of application: **18.03.2026**
(21) Application number: 24832184.6
(22) Date of filing: 27.03.2024
(51) Int. Cl.: H01Q 1/24, H01Q 1/38, G01S 3/46, G01S 5/02, G01S 5/04, H04B 17/20

(54) **ELECTRONIC DEVICE COMPRISING PLURALITY OF ANTENNA ELEMENTS AND CONTROL METHOD THEREFOR**

(30) Priority: 27.06.2023 KR 20230082713; 25.07.2023 KR 20230096760
(71) Applicant: Samsung Electronics Co., Ltd., Suwon-si, Gyeonggi-do 16677 (KR)
(72) Inventor: JEON, Seunggil, Suwon-si Gyeonggi-do 16677 (KR)
(74) Representative: Gulde & Partner
(86) International application number: PCT/KR2024/003811
(87) International publication number: WO 2025/005399

(57) **Abstract**

An electronic device may comprise: a substrate including a first side facing a first direction and a second side facing a second direction opposite to the first direction; and a plurality of antenna elements connected to the substrate. In an embodiment, the plurality of antenna elements may comprise: a first antenna element disposed on the first side of the substrate; a second antenna element disposed on the first side of the substrate and spaced apart from the first antenna element by a first separation distance with respect to a third direction, which is a direction orthogonal to the first direction; and a third antenna element disposed to be spaced apart from the first antenna element by a second separation distance greater than the first separation distance, with respect to the third direction, and spaced apart from the second antenna element to be electrically separated therefrom. Various other embodiments are possible.

## Description

### Technical Field

Various embodiments disclosed in the present disclosure relate to an electronic device including a plurality of antenna elements and a method of controlling the electronic device.

### Background Art

With the advancement of wireless communication technology, electronic devices utilizing wireless communication, including at least one antenna, are becoming more common. After the commercialization of communication systems for portable wireless communication devices, wireless communication technology in electronic devices has been utilized and developed in various fields.

Electronic devices may position the source of a signal using signals received through at least one antenna and may utilize ultra-wideband (UWB) signals with a frequency band of approximately 500 megahertz (MHz) or higher.

For example, an electronic device may calculate the distance from a source to the electronic device through the exchange of pulse signals using double-sided two-way ranging (DS-TWR). Alternatively, the electronic device may calculate the relative azimuth of the source with reference to the phase difference of arriving signal (PDoA) between the signals arriving at two antennas.

However, the foregoing should not be construed as having been acknowledged by the applicant as a prior art to the description set forth in the disclosure, but should be construed only as a related art to the invention described herein.

### DISCLOSURE OF THE INVENTION

### Technical Solutions

An electronic device may measure an angle of arrival (AoA) using a phase difference of arriving signal (PDoA) of signals received from a plurality of antenna elements. However, when a spacing between the plurality of antenna elements exceeds a predetermined range (e.g., half a wavelength of a received signal), PDoA redundant references may occur, making AoA measurement difficult. Furthermore, when the spacing between the plurality of antenna elements is less than the predetermined range, resolution at a predetermined angle may be insufficient, reducing reliability and limiting AoA coverage.

Furthermore, a space within the electronic device is limited, limiting the spacing between the plurality of antenna elements. Consequently, the arrangement of the plurality of antenna elements may result in reduced resolution and limited AoA coverage.

An electronic device including a plurality of antenna elements and a method of controlling the electronic device, according to an embodiment of the present disclosure, may provide reliability and accuracy of AoA measurement, improve PDoA resolution, and/or expand AoA support coverage.

The technical goals to be achieved through embodiments of the present disclosure are not limited to those described above, and other technical goals not mentioned above are clearly understood by one of ordinary skill in the art from the following description.

According to an embodiment, an electronic device includes a substrate including a first surface facing a first direction and a second surface facing a second direction that is opposite to the first direction and a plurality of antenna elements connected to the substrate. In an embodiment, the plurality of antenna elements may include a first antenna element disposed on the first surface of the substrate, a second antenna element spaced apart from the first antenna element by a first separation distance based on a third direction, which is a direction orthogonal to the first direction, and disposed on the first surface of the substrate, and a third antenna element spaced apart from the first antenna element by a second separation distance that is greater than the first separation distance based on the third direction and electrically separated from the second antenna element.

In addition, according to an embodiment, a method of controlling an electronic device may receive a first signal for a positioning signal from a first antenna element. According to an embodiment, the method may receive a second signal for a positioning signal from a second antenna element spaced apart from the first antenna element by a first separation distance based on a preset separation direction. According to an embodiment, the method may receive a third signal for a positioning signal from a third antenna element spaced apart from the first antenna element by a second separation distance that is greater than the first separation distance based on the separation direction and electrically separated from the second antenna element. According to an embodiment, the method may identify a PDoA between at least some of the first signal, the second signal, and the third signal. According to an embodiment, using the identified PDoA between the first signal and the second signal and the identified PDoA between the first signal and the third signal, the method may measure an AoA with respect to a positioning target.

Furthermore, according to an embodiment, an electronic device includes a housing including a first plate facing a first direction, a second plate facing a second direction that is opposite to the first direction, and a side member surrounding a space between the first plate and the second plate and connecting one side of the first plate to one side of the second plate, a display visually exposed through at least a portion of the second plate, a substrate including a first surface facing the first direction and provided in the housing, and a plurality of antenna elements connected to the substrate. The plurality of antenna elements may include a first antenna element, a second antenna element spaced apart from the first antenna element by a first separation distance based on a third direction, which is a direction orthogonal to the first direction, and a third antenna element spaced apart from the first antenna element by a second separation distance that is greater than the first separation distance based on the third direction and electrically separated from the second antenna element.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a block diagram illustrating an electronic device in a network environment, according to various embodiments.
FIG. 2 is a block diagram of an antenna module of an electronic device, according to various embodiments.
FIG. 3A is a front perspective view of an electronic device according to an embodiment.
FIG. 3B is a rear perspective view of the electronic device according to an embodiment.
FIG. 3C is an exploded perspective view of the electronic device according to an embodiment.
FIG. 4 is a diagram illustrating positioning of an electronic device according to an embodiment.
FIG. 5 is a rear view of an electronic device including a plurality of antenna elements, according to an embodiment.
FIG. 6 is a rear view of the electronic device including the plurality of antenna elements, according to an embodiment.
FIG. 7 is a graph illustrating a positioning algorithm according to an embodiment.
FIG. 8 is a graph illustrating a positioning algorithm according to an embodiment.
FIG. 9 is a diagram illustrating angle of arrival (AoA) coverage of the electronic device, according to an embodiment.
FIG. 10A is a graph illustrating a positioning algorithm according to an embodiment.
FIG. 10B is a graph illustrating a positioning algorithm according to an embodiment.
FIG. 11 is a diagram illustrating AoA coverage of the electronic device, according to an embodiment.
FIG. 12 is a flowchart illustrating a method of controlling an electronic device, according to an embodiment.
FIG. 13 is a flowchart illustrating a portion of operations of the method of controlling the electronic device, according to an embodiment.
FIG. 14 is a flowchart illustrating a portion of operations of the method of controlling the electronic device, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

It should be appreciated that various embodiments of the disclosure and the terms used therein are not intended to limit the technical features set forth herein to particular embodiments and include various changes, equivalents, or replacements for a corresponding embodiment. With regard to the description of the drawings, similar reference numerals may be used to refer to similar or related components. The singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments may be implemented as software (e.g., a program 120) including one or more instructions that are stored in a storage medium (e.g., internal memory 136 or external memory 138) that is readable by a machine (e.g., an electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

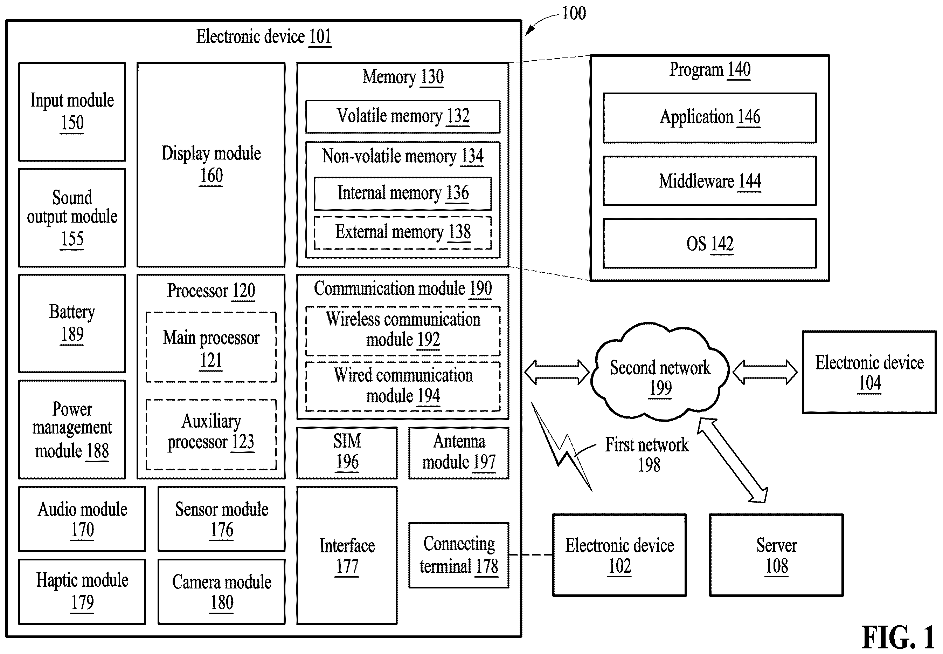

FIG. 1 is a block diagram illustrating an electronic device 101 in a network environment 100 according to various embodiments. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device #01 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150, or output the sound via an external electronic device (e.g., the electronic device 102) (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected, for example, by the communication module 190 from the plurality of antennas. The signal or the power may then be transmitted or received between the communication module 190 and the external electronic device via the at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first mixing surface (e.g., a bottom surface) of the PCB or adjacent to the first mixing surface and capable of supporting a designated a high-frequency band (e.g., the mmWave band), and a plurality of antennas (e.g., array antennas) disposed on a second mixing surface (e.g., a top or a side surface) of the PCB, or adjacent to the second mixing surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

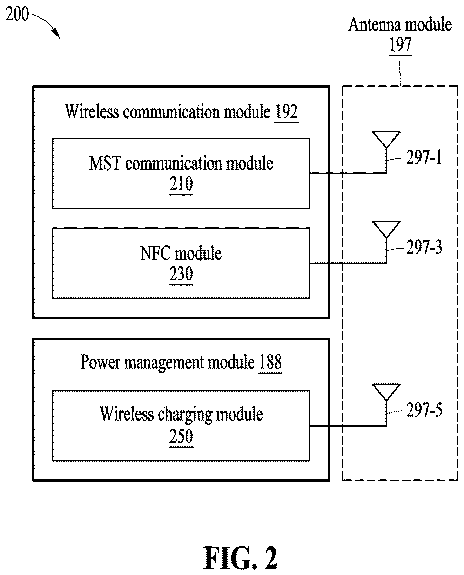

FIG. 2 is a block diagram 200 of a wireless communication module 192, a power management module 188, and an antenna module 197 of an electronic device, according to various embodiments.

Referring to FIG. 2, a wireless communication module 192 may include a magnetic secure transmission (MST) communication module 210 or a near-field communication (NFC) module 230, and the power management module 188 may include a wireless charging module 250. In this case, the antenna module 197 may include a plurality of antennas including an MST antenna 297-1 connected to the MST communication module 210, an NFC antenna 297-3 connected to the NFC module 230, and a wireless charging antenna 297-5 connected to the wireless charging module 250. For ease of description, the same components as those described with reference to FIG. 1 are briefly described or omitted from the description.

The MST communication module 210 may receive a signal including control information or payment information such as card information from a processor 120, generate a magnetic signal corresponding to the received signal via the MST antenna 297-1, and then transmit the generated magnetic signal to an external electronic device 102 (e.g., a point-of-sale (POS) device). In order to generate the magnetic signal, according to an embodiment, the MST communication module 210 may include a switching module (not shown) that includes one or more switches connected to the MST antenna 297-1 and control the switching module to change a direction of a voltage or a current supplied to the MST antenna 297-1 according to the received signal. The change of the direction of the voltage or the current allows the direction of the magnetic signal (e.g., a magnetic field) transmitted via the MST antenna 297-1 to change accordingly. When detected by the external electronic device 102, the magnetic signal with its direction changing may cause an effect (e.g., a waveform) similar to that of a magnetic field that is generated when a magnetic card corresponding to the received signal (e.g., card information) is swiped through a card reader of the electronic device 102. According to an embodiment, for example, payment-related information and a control signal that are received by the electronic device 102 in the form of the magnetic signal may be transmitted to an external server 108 (e.g., a payment server) via a second network 199.

The NFC module 230 may obtain a signal including control information or payment information such as card information from the processor 120 and transmit the obtained signal to the external electronic device 102 via the NFC antenna 297-3. According to an embodiment, the NFC module 230 may receive such a signal transmitted from the external electronic device 102 via the NFC antenna 297-3.

The wireless charging module 250 may wirelessly transmit power to the external electronic device 102 (e.g., a cellular phone or a wearable device) via the wireless charging antenna 297-5 or wirelessly receive power from the external electronic device 102 (e.g., a wireless charging device). The wireless charging module 250 may support one or more of various wireless charging schemes including, for example, a magnetic resonance scheme or a magnetic induction scheme.

According to an embodiment, some of the MST antenna 297-1, the NFC antenna 297-3, or the wireless charging antenna 297-5 may share at least a portion of radiators. For example, a radiator of the MST antenna 297-1 may be used as a radiator of the NFC antenna 297-3 or the wireless charging antenna 297-5, or vice versa. In such a case, the antenna module 297 may include a switching circuit (not shown) adapted to selectively connect (e.g., close) or disconnect (e.g. open) at least some of the antennas 297-1, 297-3, or 297-3 under the control of the wireless communication module 192 (e.g., the MST communication module 210 or the NFC module 230) or the power management module 188 (e.g., the wireless charging module 250). For example, when the electronic device 101 uses a wireless charging function, the NFC module 230 or the wireless charging module 250 may control the switching circuit to temporarily disconnect at least a partial area of the radiator shared by the NFC antenna 297-3 and the wireless charging antenna 297-5 from the NFC antenna 297-3 and to connect the at least one portion thereof to the wireless charging antenna 297-5.

According to an embodiment, at least one function of the MST communication module 210, the NFC module 230, or the wireless charging module 250 may be controlled by an external processor (e.g., the processor 120). According to an embodiment, a designated function (e.g., a payment function) of the MST communication module 210 or the NFC module 230 may be performed in a trusted execution environment (TEE). The TEE according to various embodiments may form an execution environment in which, for example, at least a partially designated area of memory 130 is allocated to be used for performing a function (e.g., a financial transaction or personal information-related function) that requires a relatively high level of security. In such a case, access to the designated area may be restrictively permitted, for example, according to an entity accessing thereto or an application being executed in the TEE.

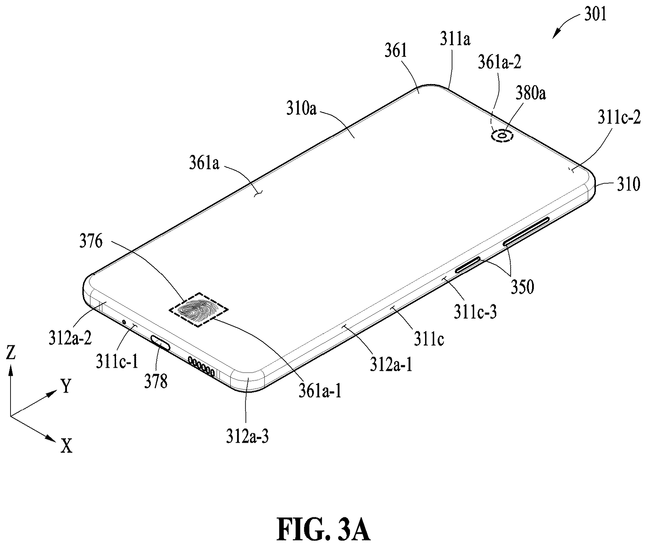

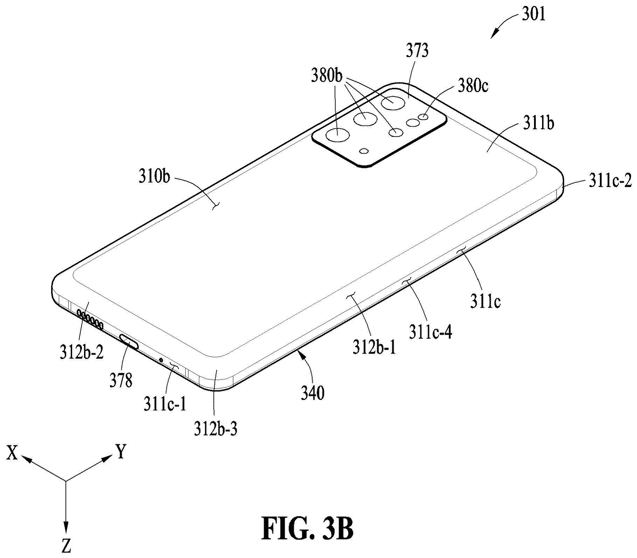

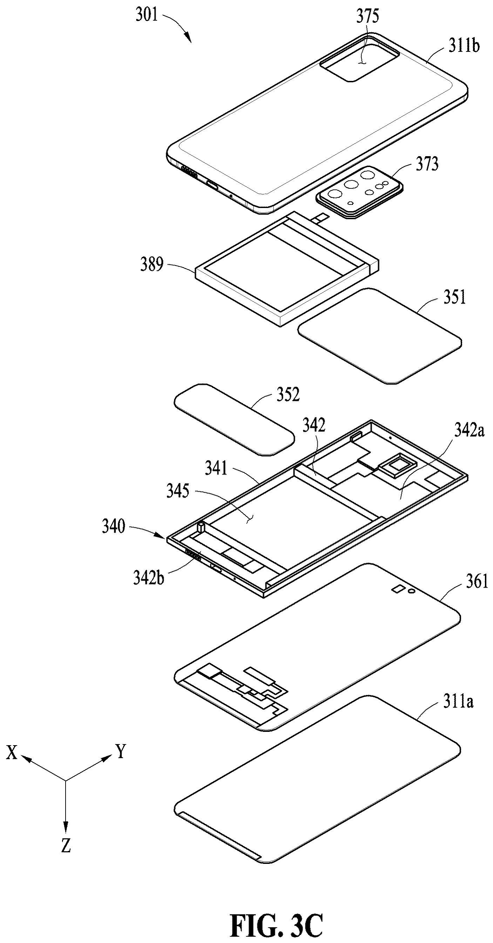

FIG. 3A is a front perspective view of an electronic device 301 according to an embodiment, FIG. 3B is a rear perspective view of the electronic device 301 according to an embodiment, and FIG. 3C is an exploded perspective view of the electronic device 301 according to an embodiment.

Referring to FIGS. 3A, 3B and 3C, an electronic device 301 (e.g., the electronic device 101 of FIG. 1) according to an embodiment may include a housing 310 forming an exterior and accommodating components therein, and the housing 310 may include a front surface 310a, a rear surface 310b, and a side surface 311c surrounding an inner space between the front surface 310a and the rear surface 310b. The housing 310 may include a plurality of side surfaces 311c extending from the front surface 310a to the rear surface 310b, and the plurality of side surfaces 311c may include a lower side surface 311c-1, an upper side surface 311c-2, a right side surface 311c-3, and a left side surface 311c-4.

In an embodiment, the front surface 310a may be formed by a front plate 311a of which at least a portion is substantially transparent. For example, the front plate 311a may include a polymer plate or a glass plate including at least one coating layer. In an embodiment, the rear surface 310b may be formed by a rear plate 311b that is substantially opaque.

For example, the rear plate 311b may be formed of coated or tinted glass, ceramic, polymer, metal (e.g., aluminum, stainless steel, or magnesium), or a combination thereof. The side surface 311c may be coupled to the front plate 311a and the rear plate 311b and may be formed by a side member 340 including metal and/or polymer. In an embodiment, the rear plate 311b and the side member 340 may be integrally and seamlessly formed. In an embodiment, the rear plate 311b and the side member 340 may be formed of substantially the same material (e.g., aluminum).

In an embodiment, the front plate 311a may include at least a portion of a plurality of first edge areas 312a-1, a plurality of second edge areas 312a-2, and a plurality of third edge areas 312a-3.

In an embodiment, the plurality of first edge areas 312a-1 may extend roundly from a portion of the front surface 310a of the front plate 311a in one direction (e.g., an X-axis direction) and toward the rear plate 311b. The plurality of second edge areas 312a-2 may extend roundly from a portion of the front surface 310a of the front plate 311a in another direction (e.g., a Y-axis direction) and toward the rear plate 311b. In addition, the plurality of third edge areas 312a-3 may extend roundly from a portion of the front surface 310a of the front plate 311a toward the rear plate 311b between the plurality of first edge areas 312a-1 and the plurality of second edge areas 312a-2.

In an embodiment, the rear plate 311b may include at least a portion of a plurality of fourth edge areas 312b-1, a plurality of fifth edge areas 312b-2, and a plurality of sixth edge areas 312b-3.

In an embodiment, the plurality of fourth edge areas 312b-1 may extend roundly from a portion of the rear surface 310b of the rear plate 311b in one direction (e.g., the X-axis direction) and toward the front plate 311a. The plurality of fifth edge areas 312b-2 may extend roundly from a portion of the rear surface 310b of the rear plate 311b in another direction (e.g., the Y-axis direction) and toward the front plate 311a. The plurality of sixth edge areas 312b-3 may extend roundly from a portion of the rear surface 310b of the rear plate 311b toward the front plate 311a between the plurality of fourth edge areas 312b-1 and the plurality of fifth edge areas 312b-2.

In an embodiment, the side member 340 may surround at least a portion of the inner space between the front surface 310a and the rear surface 310b. The side member 340 may include a first support structure 341 disposed on at least a portion of the side surface 311c and a second support structure 342 connected to the first support structure 341 to form a space for disposing the components of the electronic device 301.

In an embodiment, the first support structure 341 may connect the periphery of the front plate 311a and the periphery of the rear plate 311b and surround the space between the front plate 311a and the rear plate 311b, thereby forming the side surface 311c of the housing 310. In an embodiment, the second support structure 342 may be disposed inside (or in a body portion) of the electronic device 301. The second support structure 342 may be integrally formed with the first support structure 341 or may be formed separately from the first support structure 341 and connected to the first support structure 341. In an embodiment, the first support structure 341 and/or the second support structure 342 may be a component of the housing 310.

In an embodiment, at least one PCB assembly 351 or 352 may be disposed in the second support structure 342. The second support structure 342 may be, for example, connected to ground of the at least one PCB assembly 351 or 352.

In an embodiment, a display 361 may be disposed on a surface (e.g., a lower surface (a surface in a +Z-axis direction) of FIG. 3C) of the second support structure 342, and the rear plate 311b may be disposed on the other surface (e.g., an upper surface (a surface in the -Z-axis direction) of FIG. 3C) of the second support structure 342.

In an embodiment, at least a portion of the side member 340 may be formed of a conductive material. For example, the first support structure 341 may be formed of a metal and/or conductive polymer material. In an embodiment, the second support structure 342 may be formed of a metal and/or conductive polymer material, like the first support structure 341.

In an embodiment, the rear plate 311b of the housing 310 may include a camera hole 375 to dispose a second camera module 380b and a flash 380c, and the housing 310 may include a camera decoration 373 for protecting the second camera module 380b and the flash 380c. The camera decoration 373 may be coupled to the rear plate 311b and may be visually exposed to the outside of the housing 310 by being disposed in the camera hole 375.

In an embodiment, the electronic device 301 may include a display 361 (e.g., the display module 160 of FIG. 1). In an embodiment, the display 361 may be disposed on the front surface 310a. In an embodiment, the display 361 may be exposed through at least a portion (e.g., the plurality of first edge areas 312a-1, the plurality of second edge areas 312a-2, and the plurality of third edge areas 312a-3) of the front plate 311a. In an embodiment, the display 361 may have a shape that is substantially the same as the shape of an outer edge of the front plate 311a.

In an embodiment, the edge of the display 361 may substantially coincide with the outer edge of the front plate 311a. Although not shown in the drawings, the display 361 according to various embodiments may include a touch sensing circuit (not shown), a pressure sensor (not shown) for sensing an intensity (pressure) of a touch, and/or a digitizer (not shown) for detecting a magnetic-type stylus pen (not shown).

In an embodiment, the display 361 may include a screen display area 361a that is visually exposed to display content through a pixel or a plurality of cells. In an embodiment, the screen display area 361a may include a sensing area 361a-1 and/or a camera area 361a-2. In this case, the sensing area 361a-1 may overlap at least a portion of the screen display area 361a. The sensing area 361a-1 may allow transmission of an input signal related to a sensor module 376 (e.g., the sensor module 176 of FIG. 1). The sensing area 361a-1 may display content, like the screen display area 361a that does not overlap the sensing area 361a-1.

For example, the sensing area 361a-1 may display the content while the sensor module 376 is not operating. The camera area 361a-2 may overlap at least one area of the screen display area 361a. The camera area 361a-2 may allow transmission of an optical signal related to first camera modules 380a and 380b (e.g., the camera module 180 of FIG. 1). The camera area 361a-2 may display content, like the screen display area 361a that does not overlap the camera area 361a-2. For example, the camera area 361a-2 may display the content while the camera modules 380a and 380b are not operating.

In an embodiment, the electronic device 301 may include the sensor module 376. The sensor module 376 may sense a signal applied to the electronic device 301. The sensor module 376 may be positioned, for example, on the front surface 310a of the electronic device 301. The sensor module 376 may form the sensing area 361a-1 in at least a portion of the screen display area 361a.

For example, the sensor module 376 may also be disposed to perform its function in the inner space of the electronic device 301 without being visually exposed through the display 361. The sensor module 376 may receive an input signal transmitted through the sensing area 361a-1 and generate an electrical signal based on the received input signal. For example, the input signal may have a designated physical quantity (e.g., heat, light, temperature, sound, pressure, or ultrasound). In another example, the input signal may include a signal related to biometric information (e.g., a fingerprint, a voice, and the like) of a user.

In an embodiment, the electronic device 301 may include camera modules 380a and 380b (e.g., the camera module 180 of FIG. 1). In an embodiment, the camera modules 380a and 380b may include the first camera module 380a and the second camera module 380b and may further include the flash 380c in various embodiments.

In an embodiment, the first camera module 380a may be disposed to be visible from the outside through the front surface 310a of the housing 310, and the second camera module 380b and the flash 380c may be disposed to be visible from the outside through the rear surface 310b of the housing 310. In an embodiment, at least a portion of the first camera module 380a may be disposed in the housing 310 to be covered by the display 361. For example, the first camera module 380a may include an under display camera (UDC). In an embodiment, the first camera module 380a may receive an optical signal transmitted through the camera area 361a-2. In an embodiment, the second camera module 380b may include a plurality of cameras (e.g., dual cameras, triple cameras, or quad cameras). In an embodiment, the flash 380c may include a light-emitting diode or a xenon lamp.

In an embodiment, the electronic device 301 may include an input module 350 (e.g., the input module 150 of FIG. 1). The input module 350 may receive a manipulation signal of a user. The input module 350 may include, for example, at least one key input device disposed to be exposed on the side surface 311c of the housing 310.

In an embodiment, the electronic device 301 may include a connecting terminal 378 (e.g., the connecting terminal 178 of FIG. 1). In an embodiment, the connecting terminal 378 may be disposed on an outer circumferential surface of the housing 310 and for example, may be disposed on the lower side surface 311c of the electronic device 301 as shown in FIG. 3A. Specifically, when the electronic device 301 is viewed in a direction (e.g., a +Y-axis direction of FIG. 3A), the connecting terminal 378 may be disposed on a central portion of the lower side surface 311c.

As illustrated in FIGS. 3A and 3B, the connecting terminal 378 may be disposed on the side surface 311c of the housing 310 that forms the exterior of the electronic device 301. However, in an actual implementation, embodiments are not limited thereto, and at least a portion of the connecting terminal 378 may be disposed on the front surface 310a or the rear surface 310b of the housing 310 or may be disposed inside the housing 310. For example, although not shown in the drawings, the housing 310 in an embodiment may include a cover (not shown) for replacing a battery 389.

In an embodiment, the electronic device 301 may include the battery 389 (e.g., the battery 189 of FIG. 1) and at least one PCB assembly 351 or 352 including one or more PCBs.

In an embodiment, the electronic device 301 may include a plurality of PCB assemblies 351 and 352 and for example, the plurality of PCB assemblies 351 and 352 may include two PCB assemblies spaced apart from each other. For example, the plurality of PCB assemblies 351 and 352 may include the first circuit board assembly 351 and the second circuit board assembly 352.

The first circuit board assembly 351 in an embodiment may be a main board of the electronic device 301 that is accommodated in a first board slot 342a of the second support structure 342, and the second circuit board assembly 352 may be a sub-board of the electronic device 301 that is accommodated in a second board slot 342b of the second support structure 342.

In an embodiment, the battery 389 may be accommodated in a battery slot 345 of the second support structure 342 formed between the first board slot 342a and the second board slot 342b.

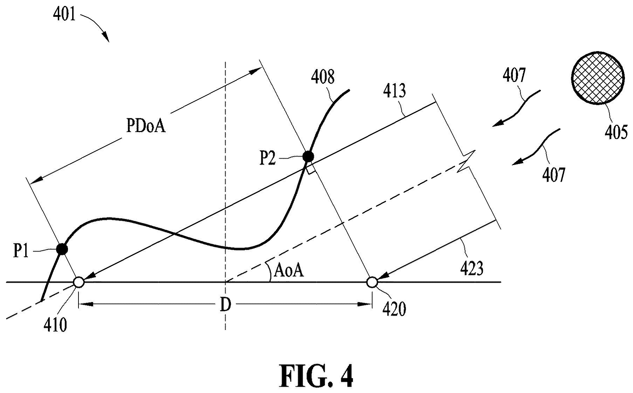

FIG. 4 is a diagram illustrating positioning of an electronic device 401 according to an embodiment.

FIG. 4 is an example diagram for illustrating angle of arrival (AoA) positioning of an electronic device 401 according to an embodiment, and a positioning scheme of the electronic device 401 according to an embodiment of the disclosure is not limited thereto. The electronic device 401 may use various positioning schemes through a plurality of antenna elements 410 and 420.

Referring to FIG. 4, the electronic device 401 according to an embodiment (e.g., the electronic device 101 of FIG. 1 and the electronic device 301 of FIGS. 3A, 3B, and 3C) may include a plurality of elements 410 and 420 (e.g., the antenna module 197 of FIGS. 1 and 2).

Hereinafter, the description provided above is not repeated, and it is obvious that a portion of the configuration and structure of the electronic device 401 may be replaced, added, or omitted within a scope easily understandable by one of ordinary skill in the art with reference to the following drawings and descriptions. In addition, at least one component or feature of the embodiments described above may be coupled to the electronic device 401 unless this is technically and clearly infeasible.

In an embodiment, a positioning target 405 may transmit a positioning signal 407. The positioning target 405 may be another electronic device (e.g., the electronic device 102 or the electronic device 104 of FIG. 1), a signal source, or a transmitter (Tx). The positioning target 405 may be spaced apart from the electronic device 401. The positioning signal 407 may form a waveform 408 having a predetermined wavelength (λ).

In an embodiment, the plurality of antenna elements 410 and 420 may include a first antenna element 410 and a second antenna element 420. The first antenna element 410 and the second antenna element 420 may be spaced apart from each other by a separation distance D based on a predetermined direction. The first antenna element 410 and the second antenna element 420 may receive a first signal 413 and a second signal 423, respectively.

In an embodiment, the distance between the positioning target 405 and the electronic device 401 may be relatively large compared to the separation distance D of the plurality of antenna elements 410 and 420 of the electronic device 401. Accordingly, it may be assumed that reception signals 413 and 423 transmitted respectively to the plurality of antenna elements 410 and 420 are transmitted substantially horizontally to the plurality of antenna elements 410 and 420.

In an embodiment, using a processor (e.g., the processor 120 of FIG. 1) and memory (e.g., the memory 130 of FIG. 1), the electronic device 401 may measure an AoA with respect to the positioning target 405.

In an embodiment, the processor 120 may receive the reception signals 413 and 423 from the plurality of antenna elements 410 and 420. The memory 130 may be operatively connected to the processor 120 and may store executable instructions. The processor 120 may measure the AoA from the electronic device 401 to the positioning target 405 by executing the instructions stored in the memory 130.

In an embodiment, due to the separation distance D between the first antenna element 410 and the second antenna element 420, a phase P1 of the first signal 413 received by the first antenna element 410 and a phase P2 of the second signal 423 received by the second antenna element 420 may be different from each other. The processor 120 may measure a phase difference of arriving signal (PDoA) by identifying the phase P1 of the first signal 413 and the phase P2 of the second signal 423.

In an embodiment, the separation distance D may be stored in the memory 130 of the electronic device 401. The separation distance D may be the physical distance between the central portion of the first antenna element 410 and the central portion of the second antenna element 420. Alternatively, the separation distance D may be the physical distance between one end of the first antenna element 410 and one end of the second antenna element 420. Alternatively, the separation distance D may be the electrical separation distance between the plurality of antenna elements 410 and 420.

In an embodiment, when the positioning signal 407 has a frequency band in the gigahertz (GHz) unit of ultra-wideband (UWB) and the separation distance D is half the length of the wavelength (λ) (e.g., λ/2) or is close to half the length of the wavelength (λ), the electronic device 401 may derive a reliable AoA measurement result. For example, the separation distance D may be half the length of the wavelength (λ) (e.g., λ/2) of the positioning signal 407. Alternatively, the separation distance D may have a predetermined range that includes half the length of the wavelength (λ) (e.g., λ/2) of the positioning signal 407, for example, a range of +/-3%, +/-5%, +/-10%, or +/-20% of half the length of the wavelength (λ).

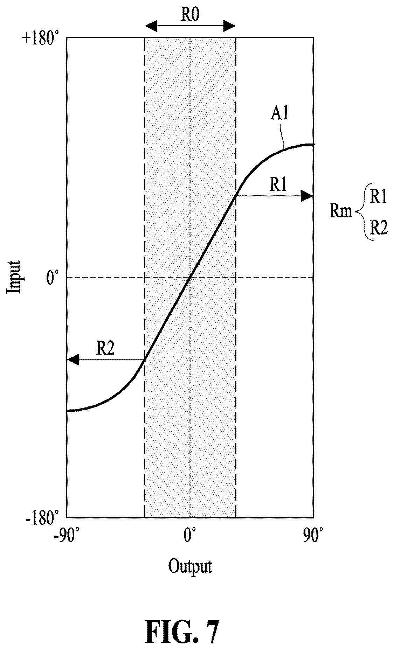

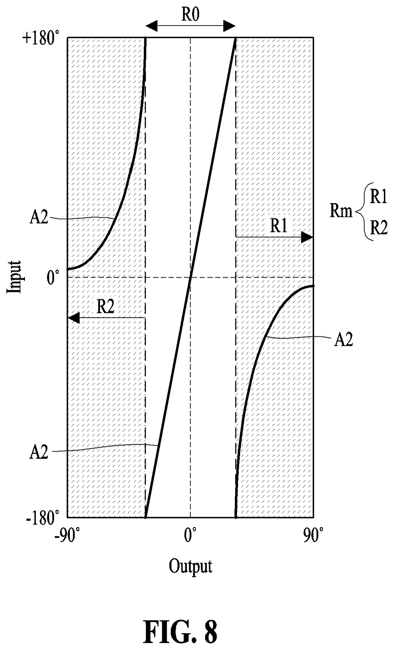

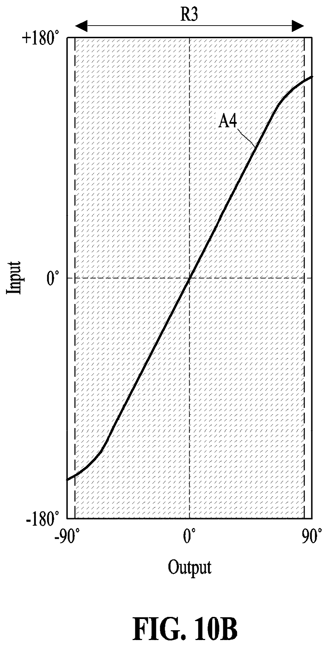

In an embodiment, the processor 120 may execute instructions related to a positioning algorithm (e.g., a basic positioning algorithm A1 of FIG. 7, a correction positioning algorithm A2 of FIG. 8, or a meta-positioning algorithm A4 of FIG. 10B) stored in the memory 130 to measure an AoA using a PDoA.

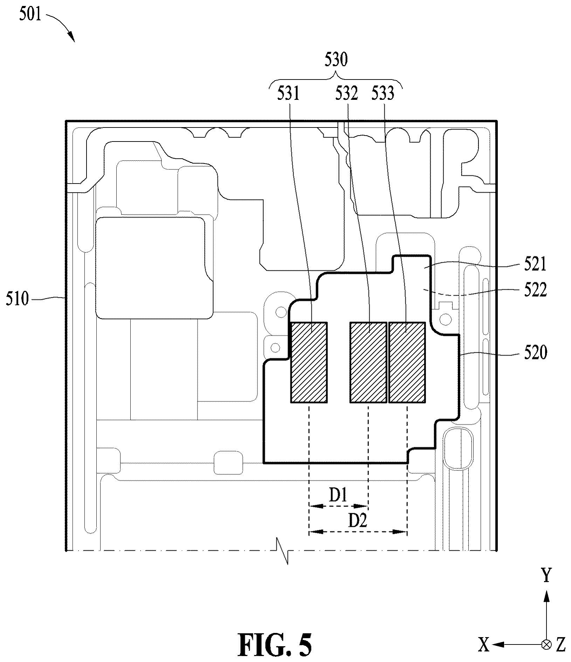

FIG. 5 is a rear view of an electronic device 501 including a plurality of antenna elements 530, according to an embodiment.

Referring to FIG. 5, an electronic device 501 according to an embodiment (e.g., the electronic device 101 of FIG. 1, the electronic device 301 of FIGS. 3A, 3B, and 3C, or the electronic device 401 of FIG. 4) may include a substrate 520 (e.g., the PCB assemblies 351 and 352 of FIG. 3C) and a plurality of antenna elements 530 (e.g., the antenna module 197 of FIGS. 1 and 2 or the plurality of antenna elements 410 and 420 of FIG. 4).

Hereinafter, the description provided above is not repeated, and it is obvious that a portion of the configuration and structure of the electronic device 501 may be replaced, added, or omitted within a scope easily understandable by one of ordinary skill in the art with reference to the following drawings and descriptions. In addition, at least one component or feature of the embodiments described above may be coupled to the electronic device 501 unless this is technically and clearly infeasible.

In an embodiment, the substrate 520 may include a first surface 521 facing a first direction (e.g., a -Z direction) and a second surface 522 facing a second direction (e.g., a +Z direction) that is opposite to the first direction. A plurality of electrical components may be provided on the substrate 520, and the substrate 520 may be disposed inside a housing 510.

In an embodiment, the plurality of antenna elements 530 may be electrically and/or physically connected to the substrate 520. The plurality of antenna elements 530 may include a first antenna element 531, a second antenna element 532, and a third antenna element 533. The plurality of antenna elements 530 may receive a signal from a positioning target (e.g., the positioning target 405 of FIG. 4).

In an embodiment, the first antenna element 531 and the second antenna element 532 may be disposed on the first surface 521 of the substrate 520. The first antenna element 531 and the second antenna element 532 may be spaced apart by a first separation distance D1.

In an embodiment, the first separation distance D1 may be a straight-line distance between the first antenna element 531 and the second antenna element 532 based on a third direction (e.g., a -X direction) that is orthogonal to the first direction.

For example, the first direction may be a direction in which either the rear surface or front surface of the electronic device 501 faces, the second direction may be a direction in which the other one of the rear surface or front surface of the electronic device 501 faces, the third direction may be a direction in which one of a plurality of side surfaces of the electronic device 501 faces, and the fourth direction that is opposite to the third direction may be a direction in which the other of the plurality of side surfaces of the electronic device 501 faces.

Alternatively, for example, in the electronic device 501 having a front or rear surface of a rectangular shape, the third direction and the fourth direction may be either the two directions (e.g., +X direction and -X direction) of the short axis of the electronic device 501 or the two directions (e.g., +Y direction and -Y direction) of the long axis of the electronic device 501.

However, the above description is only an example, and the first direction, the second direction, the third direction, and the fourth direction may be variously changed in consideration of the shape, structure, and characteristics of the electronic device 501.

In an embodiment, the first separation distance D1 may be the distance from the geometric center of the first antenna element 531 to the geometric center of the second antenna element 532. Alternatively, the first separation distance D1 may be the distance from one end (e.g., a -X-axis end) of the first antenna element 531 to the same end (e.g., a -X-axis end) of the second antenna element 532 or may be the electrical separation distance between the first antenna element 531 and the second antenna element 532.

In an embodiment, the third antenna element 533 may be disposed on the first surface 521 of the substrate 520. The first antenna element 531 and the third antenna element 533 may be spaced apart by a second separation distance D2. The second separation distance D2 may be greater than the first separation distance D1.

In an embodiment, the second antenna element 532 and the third antenna element 533 may be electrically separated from each other. Each of the second antenna element 532 and the third antenna element 533 may independently receive a signal.

In an embodiment, the first separation distance D1 may be equal to or less than half the wavelength (λ) (e.g., λ/2) of a positioning signal (e.g., the positioning signal 407 of FIG. 4) transmitted by a positioning target. Additionally, the second separation distance D2 may be greater than half the wavelength (λ) (e.g., λ/2) of the positioning signal transmitted by the positioning target.

In an embodiment, the memory 130 may store a positioning algorithm based on the first separation distance D1 and the second separation distance D2. Alternatively, the memory 130 may store the first separation distance D1 and the second separation distance D2, and an operation for setting a positioning algorithm may be stored using the first separation distance D1 and the second separation distance D2. Using the memory 130, the processor 120 may set or use a positioning algorithm.

In an embodiment of the disclosure, the electronic device 501 may improve the performance of measuring an AoA with respect to a positioning target through the plurality of antenna elements 530 spaced apart by the first separation distance D1 and the second separation distance D2.

For example, the electronic device 501 may expand AoA measurement coverage. Alternatively, the electronic device 501 may improve AoA measurement reliability and accuracy. According to an embodiment of the disclosure, the plurality of antenna elements 530 spaced apart by the first separation distance D1 and the second separation distance D2, an operation of the processor 120 of the electronic device 501 using the plurality of antenna elements 530, and a method 600 of controlling the electronic device 501 are described with reference to FIG. 7 and so on.

In an embodiment, the first antenna element 531, the second antenna element 532, and the third antenna element 533 may be arranged in a row in the third direction. Alternatively, the plurality of antenna elements 530 may be arranged on a single straight line horizontal to the third direction without being spaced apart in another direction (e.g., a Y-axis direction) perpendicular to the first direction and the third direction.

In an embodiment, the plurality of antenna elements 530 may be arranged in a row, thereby reducing an error that may occur when at least one of the plurality antenna elements 530 is spaced in a different direction and improving AoA measurement reliability and accuracy.

In an embodiment of the disclosure, the arrangement design of the plurality of antenna elements 530 may be implemented in various ways, within a range where the plurality of antenna elements 530 is spaced apart by the first separation distance D1 and the second separation distance D2 along the third direction.

For example, although not shown in the drawing, at least some of the plurality of antenna elements 530 may be spaced apart in a direction (e.g., the Y-axis direction) perpendicular to the first direction and the third direction. Even in this case, since each of the plurality of antenna elements 530 is spaced apart in the third direction, an AoA with respect to a positioning target may be measured along the third direction based on the first direction. In addition, with various arrangement designs within limited spaces of the electronic device 501 and the substrate 520, space efficiency of the electronic device 501 may be provided.

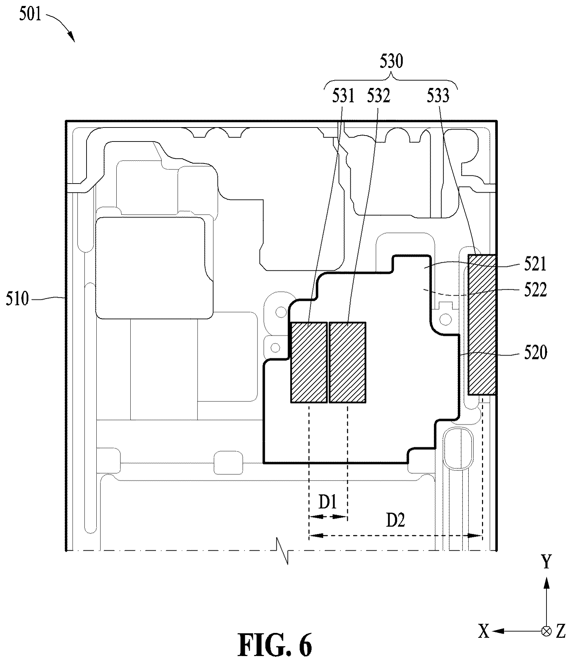

FIG. 6 is a rear view of the electronic device 501 including the plurality of antenna elements 530, according to an embodiment.

Referring to FIG. 6, the third antenna element 533 according to an embodiment may be formed of a conductive member of the housing 510.

Hereinafter, the description provided above is not repeated, and it is obvious that a portion of the configuration and structure of the electronic device 501 may be replaced, added, or omitted within a scope easily understandable by one of ordinary skill in the art with reference to the following drawings and descriptions. In addition, at least one component or feature of the embodiments described above may be coupled to the electronic device 501 unless this is technically and clearly infeasible.

In an embodiment, the housing 510 may include a first plate (e.g., the rear plate 311b of FIGS. 3B and 3C) facing a first direction and a second plate (e.g., the front plate 311a of FIGS. 3A and 3C) facing a second direction. For example, FIG. 6 may be a plan view of the interior of the housing 510 of the electronic device 501 with the first plate open.

In an embodiment, the housing 510 may include a side member (e.g., the side member 340 of FIGS. 3B and 3C). The side member may surround a space between the first plate and the second plate and connect one side of the first plate to one side of the second plate. Alternatively, the side member may be a portion of the housing 510 that faces a side surface (e.g., a surface facing an X-Y direction).

In an embodiment, the substrate 520 may include the first surface 521 facing a first direction (e.g., a -*Z* direction) and the second surface 522 facing a second direction (e.g., a +Z direction) that is opposite to the first direction. A plurality of electrical components may be provided on the substrate 520, and the substrate 520 may be disposed inside the housing 510.

In an embodiment, the first antenna element 531 and the second antenna element 532 may be disposed on the first surface 521 of the substrate 520. The first antenna element 531 and the second antenna element 532 may be spaced apart by a first separation distance D1.

In an embodiment, the first separation distance D1 may be a straight-line distance between the first antenna element 531 and the second antenna element 532 based on a third direction (e.g., a -X direction) that is orthogonal to the first direction.

For example, the first direction may be a direction in which either the rear surface or front surface of the electronic device 501 faces, the second direction may be a direction in which the other one of the rear surface or front surface of the electronic device 501 faces, the third direction may be a direction in which one of a plurality of side surfaces of the electronic device 501 faces, and the fourth direction that is opposite to the third direction may be a direction in which the other of the plurality of side surfaces of the electronic device 501 faces.

Alternatively, for example, in the electronic device 501 having a front or rear surface of a rectangular shape, the third direction and the fourth direction may be either the two directions (e.g., +X direction and -X direction) of the short axis of the electronic device 501 or the two directions (e.g., +Y direction and -Y direction) of the long axis of the electronic device 501.

However, the above description is only an example, and the first direction, the second direction, the third direction, and the fourth direction may be variously changed in consideration of the shape, structure, and characteristics of the electronic device 501.

In an embodiment, the first separation distance D1 may be the distance from the geometric center of the first antenna element 531 to the geometric center of the second antenna element 532. Alternatively, the first separation distance D1 may be the distance from one end (e.g., a -X-axis end) of the first antenna element 531 to the same end (e.g., a -X-axis end) of the second antenna element 532 or may be the electrical separation distance between the first antenna element 531 and the second antenna element 532. In an embodiment, the third antenna element 533 may be formed of a conductive member provided on the side member. The first antenna element 531 and the third antenna element 533 may be spaced apart by a second separation distance D2. The second separation distance D2 may be greater than the first separation distance D1.

In an embodiment, since the internal space of the electronic device 501 and the area of the first surface 521 of the substrate 520 are limited, the third antenna element 533 may be disposed outside the substrate 520, for example, in the housing 510, thereby providing space efficiency to the electronic device 501. In addition, since the conductive member is formed integrally with the side member, the third antenna element 533 may provide production efficiency and cost-effectiveness of the electronic device 501.

In an embodiment, the second antenna element 532 and the third antenna element 533 may be electrically separated from each other. Each of the second antenna element 532 and the third antenna element 533 may independently receive a signal.

In an embodiment, the first separation distance D1 may be equal to or less than half the wavelength (λ) (e.g., λ/2) of a positioning signal (e.g., the positioning signal 407 of FIG. 4) transmitted by a positioning target. Additionally, the second separation distance D2 may be greater than half the wavelength (λ) (e.g., λ/2) of the positioning signal transmitted by the positioning target.

In an embodiment, the memory 130 may store a positioning algorithm based on the first separation distance D1 and the second separation distance D2. Alternatively, the memory 130 may store the first separation distance D1 and the second separation distance D2, and an operation for setting a positioning algorithm may be stored using the first separation distance D1 and the second separation distance D2. Using the memory 130, the processor 120 may set or use a positioning algorithm.

In an embodiment of the disclosure, the electronic device 501 may improve the performance of measuring an AoA with respect to a positioning target through the plurality of antenna elements 530 spaced apart by the first separation distance D1 and the second separation distance D2. For example, the electronic device 501 may expand AoA measurement coverage. Alternatively, the electronic device 501 may improve AoA measurement reliability and accuracy.

In an embodiment of the disclosure, the arrangement design of the plurality of antenna elements 530 may be implemented in various ways, within a range where the plurality of antenna elements 530 is spaced apart by the first separation distance D1 and the second separation distance D2 along the third direction.

For example, although not shown in the drawing, each of the first antenna element 531, the second antenna element 532, and the third antenna element 533 may be formed of a conductive member that is spaced apart from the side member.

In an embodiment, the positions of the first antenna element 531, the second antenna element 532, and the third antenna element 533 are not limited and may be implemented in various ways within a range that forms the first separation distance D1 and the second separation distance D2 based on the third direction.

For example, the first antenna element 531 and the second antenna element 532 may be formed of a conductive member that is provided adjacent to an area of the side member that faces one direction (e.g., +Y direction). The third antenna element 533 may be formed of a conductive member provided in an area of the side member that faces another direction (e.g., -X direction).

Alternatively, for example, the first antenna element 531 may be formed of a conductive member provided in an area of the side member that faces one direction (e.g., +X direction), the second antenna element 532 may be formed of a conductive member provided in an area of the side member that faces another direction (e.g., +Y direction or -Y direction), and the third antenna element 533 may be formed of a conductive member provided in an area of the side member that faces yet another direction (e.g., -X direction).

The plurality of antenna elements 530 according to various embodiments of the disclosure may be spaced apart in the third direction, so an AoA with respect to a positioning target may be measured along the third direction based on the first direction. In addition, with various arrangement designs within limited spaces of the electronic device 501 and the substrate 520, space efficiency of the electronic device 501 may be provided.

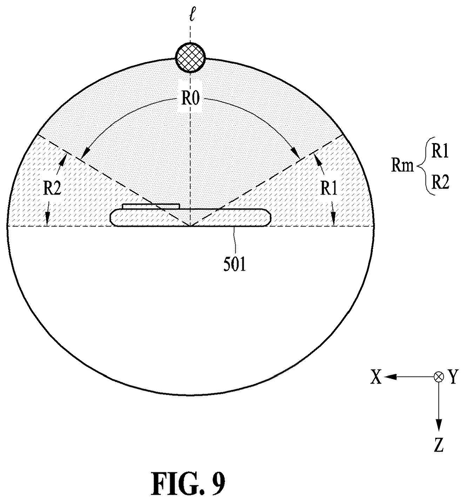

FIG. 7 is a graph illustrating a positioning algorithm A1 according to an embodiment, FIG. 8 is a graph illustrating a positioning algorithm A2 according to an embodiment, and FIG. 9 is a diagram illustrating AoA coverage of the electronic device 501 according to an embodiment.

For example, FIG. 7 is a graph illustrating a basic positioning algorithm A1 based on a first separation distance D1, FIG. 8 is a graph illustrating a correction positioning algorithm A2 based on a second separation distance D2, and FIG. 9 is a schematic diagram illustrating a range (e.g., R0 and Rm) of AoA coverage of the electronic device 501 that is extended using the basic positioning algorithm A1 and the correction positioning algorithm A2.

Referring to FIGS. 7, 8, and 9, using the basic positioning algorithm A1 and the correction positioning algorithm A2, the processor 120 may extend the AoA coverage of the electronic device 501.

Hereinafter, the description provided above is not repeated, and it is obvious that a portion of the configuration and structure of the electronic device 501 may be replaced, added, or omitted within a scope easily understandable by one of ordinary skill in the art with reference to the following drawings and descriptions. In addition, at least one component or feature of the embodiments described above may be coupled to the electronic device 501 unless this is technically and clearly infeasible.

In addition, hereinafter, an example in which an electronic device (e.g., the electronic device 101 of FIG. 1, the electronic device 301 of FIGS. 3A, 3B, and 3C, the electronic device 401 of FIG. 4, the electronic device 501 of FIG. 5, or the electronic device 501 of FIG. 6) including a plurality of antenna elements (e.g., the plurality of antenna elements 530 of FIG. 5 or 6) measures an AoA with respect to a positioning target (e.g., the positioning target 405 of FIG. 4) using a signal received from each of the plurality of antenna elements 530 is described. However, in an actual implementation of the electronic device 501, embodiments are not limited thereto, and the positioning of the electronic device 501 may be performed by modifying, changing, omitting, and/or replacing various operations and information.

In an embodiment, using a PDoA of a plurality of signals received by the plurality of antenna elements 530, a processor (e.g., the processor 120 of FIG. 1) of the electronic device 501 may measure an AoA with respect to a positioning target.

In an embodiment, using the plurality of antenna elements 530, the processor 120 may receive a signal for a positioning signal. The processor 120 may identify a PDoA between at least some of a first signal received from a first antenna element (e.g., the first antenna element 531 of FIG. 5 or 6), a second signal received from a second antenna element (e.g., the second antenna element 532 of FIG. 5 or 6), and a third signal received from a third antenna element (e.g., the third antenna element 533 of FIG. 5 or 6).

FIG. 7 may be a graph illustrating the basic positioning algorithm A1 based on the first separation distance D1 according to an embodiment, and FIG. 8 may be a graph illustrating the correction positioning algorithm A2 based on the second separation distance D2.

Referring to FIG. 7, an input may be the PDoA between the first signal and the second signal, and referring to FIG. 8, an input may be the PDoA between the first signal and the third signal. Additionally, outputs illustrated in FIGS. 7 and 8 may be expected values of an AoA of the electronic device 501 and the positioning target according to the basic positioning algorithm A1 and the correction positioning algorithm A2.

The angles of the outputs illustrated in FIGS. 7 and 8 are obtained by measuring the direction of the positioning target based on a reference line 1 of FIG. 9. Based on the first direction of the electronic device 501 and the substrate 520 described above with reference to FIGS. 5 and 6, 0 degrees may be a direction that matches the reference line 1 or the first direction, +90 degrees may be a third direction (or a fourth direction that is opposite to the third direction) in which the plurality of antenna elements 530 is arranged, and -90 degrees may be the fourth direction (or the third direction) that is opposite to the third direction.

Although FIGS. 7 and 8 illustrate the basic positioning algorithm A1 and the correction positioning algorithm A2 as substantially flat linear lines, this may be a schematic representation for ease of description or may be a result of performing separate flattening.

In an embodiment, the reliability and/or accuracy of the basic positioning algorithm A1 may be reduced within a correction angle range Rm. When it is determined that a measured AoA falls within a preset correction angle range Rm, the processor 120 may correct the AoA using the correction positioning algorithm A2. The correction angle range Rm may include a first correction range R1 and a second correction range R2.

For example, for an output of the basic positioning algorithm A1 based on the first separation distance D1 of FIG. 7, an input-output change of the basic positioning algorithm A1 has a high resolution in the basic positioning range R0 adjacent to 0 degrees, whereas the input-output change has a relatively low resolution in the first correction range R1 and the second correction range R2 that exceed the basic positioning range R0.

In addition, for example, for an output of the correction positioning algorithm A2 based on the second separation distance D2 of FIG. 8, the input-output change of the correction positioning algorithm A2 in each of the first correction range R1 and the second correction range R2 has a high resolution. In addition, since input-output values do not overlap in the first correction range R1 and the second correction range R2 each other, one output may be derived from one input, except for the basic positioning range R0.

In an embodiment of the disclosure, when it is determined that the measured AoA falls within the preset correction angle range Rm, the processor 120 of the electronic device 501 may correct the measured AoA using the PDoA between the first signal and the third signal and the correction positioning algorithm A2.

Referring to FIG. 9, the basic positioning range R0 may be a range in which the AoA with respect to the positioning target is measured using the identified PDoA between the first signal and the second signal and the basic positioning algorithm A1, when the measured AoA does not fall within the correction angle range Rm.

Additionally, the correction angle range Rm may be a range in which the AoA with respect to the positioning target is measured using the identified PDoA between the first signal and the third signal and the correction positioning algorithm A2 when the measured AoA is outside the basic positioning range R0 or falls within the preset correction angle range Rm.

In an embodiment of the disclosure, using the PDoA between signals received from the plurality of antenna elements 530 spaced apart by the first separation distance D1 and the second separation distance D2, the basic positioning algorithm A1, and the correction positioning algorithm A2, the electronic device 501 may extend AoA coverage and improve AoA measurement reliability and accuracy.

In an embodiment, the basic positioning range R0 may be a range of up to approximately 60 degrees in the third and fourth directions based on the first direction. For example, the first correction range R1 may be a range of approximately 60 degrees to approximately 90 degrees in the third direction based on the first direction. The second correction range R2 may be a range of approximately 60 degrees to approximately 90 degrees in the fourth direction based on the first direction. However, this is an example numerical range, and the numerical range may change depending on various elements of the electronic device 501.

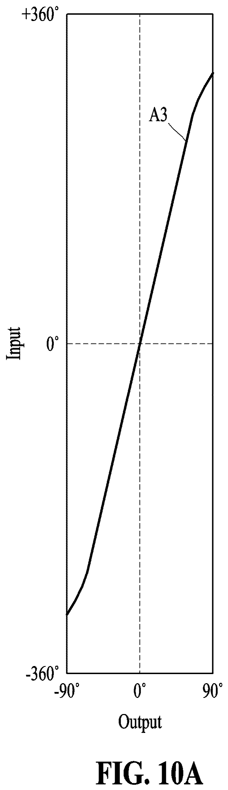

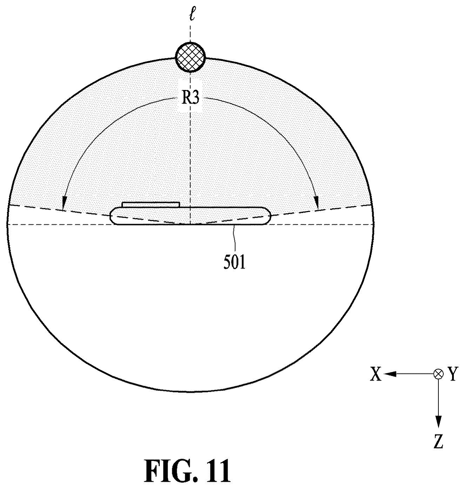

FIG. 10A is a graph illustrating a positioning algorithm A3 according to an embodiment, FIG. 10B is a graph illustrating a positioning algorithm A4 according to an embodiment, and FIG. 11 is a diagram illustrating AoA coverage of the electronic device 501 according to an embodiment.

For example, FIG. 10A is a graph illustrating a synthetic positioning algorithm A3 obtained by synthesizing a positioning algorithm (e.g., the basic positioning algorithm A1 of FIG. 7) based on a first separation distance D1 and a positioning algorithm (e.g., the correction positioning algorithm A2 of FIG. 8) based on a second separation distance D2, FIG. 10B is a graph illustrating a meta-positioning algorithm A4 that scales the synthetic positioning algorithm A3, and FIG. 11 is a schematic diagram illustrating a range R3 in which the AoA coverage of the electronic device 501 is expanded using the meta-positioning algorithm A4.

Referring to FIGS. 10A, 10B, and 11, using the meta-positioning algorithm A4, the processor 120 may expand the AoA coverage of the electronic device 501.

Hereinafter, the description provided above is not repeated, and it is obvious that a portion of the configuration and structure of the electronic device 501 may be replaced, added, or omitted within a scope easily understandable by one of ordinary skill in the art with reference to the following drawings and descriptions. In addition, at least one component or feature of the embodiments described above may be coupled to the electronic device 501 unless this is technically and clearly infeasible.

In addition, hereinafter, an example in which an electronic device (e.g., the electronic device 101 of FIG. 1, the electronic device 301 of FIGS. 3A, 3B, and 3C, the electronic device 401 of FIG. 4, the electronic device 501 of FIG. 5, or the electronic device 501 of FIG. 6) including a plurality of antenna elements (e.g., the plurality of antenna elements 530 of FIG. 5 or 6) measures an AoA with respect to a positioning target (e.g., the positioning target 405 of FIG. 4) using a signal received from each of the plurality of antenna elements 530 is described. However, in an actual implementation of the electronic device 501, embodiments are not limited thereto, and the positioning of the electronic device 501 may be performed by modifying, changing, omitting, and/or replacing various operations and information.

In an embodiment, using a PDoA of a plurality of signals received by the plurality of antenna elements 530, a processor (e.g., the processor 120 of FIG. 1) of the electronic device 501 may measure an AoA with respect to a positioning target.

In an embodiment, using the plurality of antenna elements 530, the processor 120 may receive a signal for a positioning signal. The processor 120 may identify a PDoA between at least some of a first signal received from a first antenna element (e.g., the first antenna element 531 of FIG. 5 or 6), a second signal received from a second antenna element (e.g., the second antenna element 532 of FIG. 5 or 6), and a third signal received from a third antenna element (e.g., the third antenna element 533 of FIG. 5 or 6).

FIG. 10A may be a graph of the synthetic positioning algorithm A3 obtained by synthesizing the positioning algorithm (e.g., the basic positioning algorithm A1) based on the first separation distance D1 with the positioning algorithm (e.g., the correction positioning algorithm A2) based on the second separation distance D2, and FIG. 10B may be a graph illustrating the meta-positioning algorithm A4 formed by scaling (e.g., by a factor of 1/2) the synthetic positioning algorithm A3.

In an embodiment, the meta-positioning algorithm A4 may be formed by overlapping and scaling the positioning algorithm (e.g., the basic positioning algorithm A1 of FIG. 7) based on the first separation distance D1 and the positioning algorithm (e.g., the correction positioning algorithm A2 of FIG. 8) based on the second separation distance D2.

In FIG. 10B, an input of the meta-positioning algorithm A4 may be a scaling value (e.g., by a factor of 1/2) of the sum of the PDoA between the first signal and the second signal and the PDoA between the first signal and the third signal. Additionally, an output of the meta-positioning algorithm A4 of FIG. 10B may be an expected value of the AoA of the electronic device 501 and the positioning target.

The angle of the output illustrated in FIG. 10B is obtained by measuring the direction of the positioning target based on a reference line 1 of FIG. 11. Based on the first direction of the electronic device 501 and the substrate 520 described above with reference to FIGS. 5 and 6, 0 degrees may be a direction that matches the reference line 1 or the first direction, +90 degrees may be a third direction (or a fourth direction that is opposite to the third direction) in which the plurality of antenna elements 530 is arranged, and -90 degrees may be the fourth direction (or the third direction) that is opposite to the third direction.

Although FIG. 10B illustrates the meta-positioning algorithm A4 as a substantially flat linear line, this may be a schematic representation for ease of description or a result of performing separate flattening.

In an embodiment, using the meta-positioning algorithm A4 based on the first separation distance D1 and the second separation distance D2, the identified PDoA between the first signal and the second signal, and the identified PDoA between the first signal and the third signal, the processor 120 may measure an AoA.

For example, for the output of the meta-positioning algorithm A4, compared to the basic positioning algorithm A1 of FIG. 7, the input-output change in the output range area R3 has a high resolution.

In an embodiment, using the meta-positioning algorithm A4 stored in the memory 130 or based on the first separation distance D1 and the second separation distance D2, the processor 120 of the electronic device 501 may generate the meta-positioning algorithm A4.

In an embodiment of the disclosure, using the meta-positioning algorithm A4 and a PDoA of signals received from the plurality of antenna elements 530, the electronic device 501 may expand AoA coverage and improve AoA measurement reliability and accuracy.

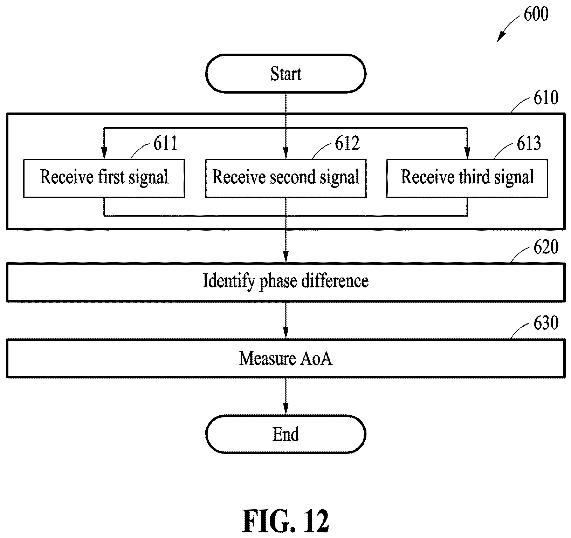

FIG. 12 is a flowchart illustrating a method 600 of controlling an electronic device according to an embodiment.

Referring to FIG. 12, a method 600 of controlling an electronic device 501 according to an embodiment may include at least some of operation 610 of receiving a signal from the plurality of antenna elements 530, operation 620 of identifying a PDoA, and operation 630 of measuring an AoA.

Hereinafter, the description provided above is not repeated, and it is obvious that a portion of the configuration, structure, or operation of the electronic device 501 and the method of controlling the electronic device 501 may be replaced, added, or omitted within a scope easily understandable by one of ordinary skill in the art with reference to the following drawings and descriptions. In addition, at least one component, operation, or feature of the embodiments described above may be coupled to the electronic device 501 and the method of controlling the electronic device 501 unless this is technically and clearly infeasible.

In an embodiment, operation 610 of receiving a signal from the plurality of antenna elements 530 may include operation 611 of receiving a first signal, operation 612 of receiving a second signal, and operation 613 of receiving a third signal. Operation 611 of receiving the first signal, operation 612 of receiving the second signal, and operation 613 of receiving the third signal may be performed independently of one another, without any prioritization restrictions, or at least some of the operations may be performed simultaneously.

In an embodiment, operation 611 of receiving the first signal may receive the first signal for a positioning signal from the first antenna element 531. Operation 612 of receiving the second signal may receive the second signal for a positioning signal from the second antenna element 532 that is disposed at the first separation distance D1 based on a predetermined separation direction from the first antenna element 531. For example, the first antenna element 531 and the second antenna element 532 may be disposed on the first surface 521 facing the first direction of the substrate 520 and spaced apart from each other by the first separation distance D1 in a direction perpendicular to the first direction.

In an embodiment, operation 613 of receiving the third signal may receive the third signal for a positioning signal from the third antenna element 533 that is spaced apart from the first antenna element 531 by the second separation distance D2 that is greater than the first separation distance D1 in the separation direction and is electrically separated from the second antenna element 532. For example, the first antenna element 531 and the third antenna element 533 may be disposed on the first surface 521 facing the first direction of the substrate 520 and spaced apart from each other by the second separation distance D2 in a direction perpendicular to the first direction.

In an embodiment, operation 620 of identifying a PDoA may identify a PDoA between at least some of the first signal, the second signal, and the third signal.

In an embodiment, using the PDoA between the first signal and the second signal and the PDoA between the first signal and the third signal identified in operation 620 of identifying a PDoA, operation 630 of measuring an AoA may measure an AoA with respect to a positioning target from the electronic device 501.

In an embodiment of the disclosure, the method 600 of controlling the electronic device 501 may identify the PDoA of signals received by at least two antenna elements through the plurality of antenna elements 530 spaced apart by the first separation distance D1 and the second separation distance D2 and may perform AoA measurement by utilizing the PDoA. The method 600 of controlling the electronic device 501 may improve reliability and/or accuracy and expand AoA coverage of the electronic device 501.

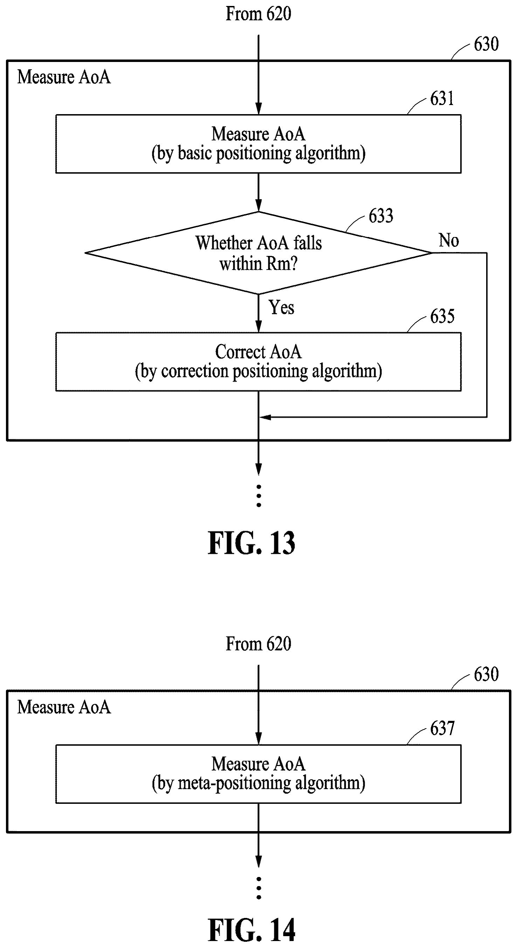

FIG. 13 is a flowchart illustrating a portion of operations of a method of controlling an electronic device, according to an embodiment.

Referring to FIG. 13, operation 630 of measuring an AoA according to an embodiment may include at least a portion of operation 631 of measuring an AoA using a basic positioning algorithm A1 and operation 635 of measuring an AoA using a correction positioning algorithm A2.

Hereinafter, the description provided above is not repeated, and it is obvious that a portion of the configuration, structure, or operation of the electronic device 501 and the method 600 of controlling the electronic device 501 may be replaced, added, or omitted within a scope easily understandable by one of ordinary skill in the art with reference to the following drawings and descriptions. In addition, at least one component, operation, or feature of the embodiments described above may be coupled to the electronic device 501 and the method 600 of controlling the electronic device 501 unless this is technically and clearly infeasible.

In an embodiment, operation 631 of measuring an AoA using the basic positioning algorithm A1 may measure an AoA with respect to a positioning target using the basic positioning algorithm A1 based on the first separation distance D1 and the identified PDoA between the first signal and the second signal.

In an embodiment, operation 630 of measuring an AoA may further include operation 633 of determining whether the measured AoA falls within a correction angle range Rm using the basic positioning algorithm A1.

In an embodiment, in operation 633 of determining whether the measured AoA falls within the correction angle range Rm, when it is determined that the measured AoA falls within the correction angle range Rm, operation 630 of measuring an AoA may perform operation 635 of measuring an AoA using the correction positioning algorithm A2.

For example, the correction angle range Rm may include a range of approximately +60 degrees to approximately +90 degrees and a range of approximately -60 degrees to approximately -90 degrees in a separation direction based on a reference direction that is a direction perpendicular to the separation direction.

In an embodiment, operation 635 of measuring an AoA using the correction positioning algorithm A2 may correct the measured AoA using the correction positioning algorithm A2 based on the second separation distance D2 and the identified PDoA between the first signal and the third signal, when the measured AoA falls within a preset correction angle range Rm.

In an embodiment, in operation 633 of determining whether the measured AoA falls within the correction angle range Rm, when it is determined that the measured AoA does not fall within the correction angle range Rm, operation 630 of measuring an AoA may output the measured AoA using the basic positioning algorithm A1.

In an embodiment of the disclosure, using a PDoA of signals received from the plurality of antenna elements 530, the basic positioning algorithm A1, and the correction positioning algorithm A2, the method 600 of controlling the electronic device 501 may expand AoA coverage and improve AoA measurement reliability and accuracy.

FIG. 14 is a flowchart illustrating a portion of operations of a method 600 of controlling an electronic device, according to an embodiment.

Referring to FIG. 14, operation 630 of measuring an AoA according to an embodiment may include operation 637 of measuring an AoA using a meta-positioning algorithm A4.

Hereinafter, the description provided above is not repeated, and it is obvious that a portion of the configuration and structure of the electronic device 501 may be replaced, added, or omitted within a scope easily understandable by one of ordinary skill in the art with reference to the following drawings and descriptions. In addition, at least one component or feature of the embodiments described above may be coupled to the electronic device 501 unless this is technically and clearly infeasible.

In an embodiment, using the meta-positioning algorithm A4 based on the first separation distance D1 and the second separation distance D2, the identified PDoA between the first signal and the second signal, and the identified PDoA between the first signal and the third signal, operation 637 of measuring an AoA using the meta-positioning algorithm A4 may measure an AoA with respect to a positioning target.

In an embodiment, the meta-positioning algorithm A4 may be formed by overlapping and scaling a positioning algorithm based on the first separation distance D1 and a positioning algorithm based on the second separation distance D2. Using the meta-positioning algorithm A4 stored in the memory 130 or based on the first separation distance D1 and the second separation distance D2, the method 600 of controlling the electronic device 501 may generate the meta-positioning algorithm A4.

In an embodiment of the disclosure, using a PDoA of signals received from the plurality of antenna elements 530 and the meta-positioning algorithm A4, the method 600 of controlling the electronic device 501 may expand AoA coverage and improve AoA measurement reliability and accuracy.

An electronic device 501 according to an embodiment may include a substrate 520 including a first surface 521 facing a first direction and a second surface 522 facing a second direction that is opposite to the first direction and a plurality of antenna elements 530 connected to the substrate 520. In an embodiment, the plurality of antenna elements 530 may include a first antenna element 531 disposed on the first surface 521 of the substrate 520, a second antenna element 532 spaced apart from the first antenna element 531 by a first separation distance D1 based on a third direction, which is a direction orthogonal to the first direction, and disposed on the first surface 521 of the substrate 520, and a third antenna element 533 spaced apart from the first antenna element 531 by a second separation distance D2 that is greater than the first separation distance D1 based on the third direction and electrically separated from the second antenna element 532.

In an embodiment, the third antenna element 533 may be disposed on the first surface 521 of the substrate 520.

In an embodiment, the first antenna element 531, the second antenna element 532, and the third antenna element 533 may be arranged in a row in the third direction.

In an embodiment, the electronic device may further include a housing 510 including a first plate facing the first direction, a second plate facing the second direction, and a side member surrounding a space between the first plate and the second plate, connecting one side of the first plate to one side of the second plate, and configured to accommodate the substrate 520 therein. In an embodiment, the third antenna element 533 may be formed of a conductive member provided on the side member.

In an embodiment, the electronic device may further include a processor 120 configured to receive a signal from the plurality of antenna elements 530 and memory 130 operatively connected to the processor 120 and storing executable instructions. In an embodiment, the processor 120, by executing the instructions stored in the memory 130, may be configured to, using the plurality of antenna elements 530, receive a signal for a positioning signal and identify a PDoA between at least some of a first signal received from the first antenna element 531, a second signal received from the second antenna element 532, and a third signal received from the third antenna element 533.

In an embodiment, the processor 120, by executing the instructions related to a basic positioning algorithm A1 based on the first separation distance D1 stored in the memory 130, may be configured to, using the identified PDoA between the first signal and the second signal, measure an AoA with respect to a positioning target.

In an embodiment, the processor 120, by executing the instructions related to a correction positioning algorithm A2 based on the second separation distance D2 stored in the memory 130 when the measured AoA falls within a preset correction angle range Rm, may be configured to, using the identified PDoA between the first signal and the third signal, correct the measured AoA.

In an embodiment, the correction angle range Rm may include a first correction range R1 of 60 to 90 degrees in the third direction based on the first direction and a second correction range R2 of 60 to 90 degrees in a fourth direction that is opposite to the third direction based on the first direction.

In an embodiment, the processor 120, by executing the instructions related to a meta-positioning algorithm A4 based on the first separation distance D1 and the second separation distance D2 stored in the memory 130, may be configured to, using the identified PDoA between the first signal and the second signal and the identified PDoA between the first signal and the third signal, measure an AoA with respect to a positioning target.

In an embodiment, the meta-positioning algorithm A4 may be formed by overlapping and scaling a positioning algorithm based on the first separation distance D1 and a positioning algorithm based on the second separation distance D2.

In addition, a method 600 implemented by a processor 120 may include receiving 611 a first signal for a positioning signal from a first antenna element 531, receiving 612 a second signal for a positioning signal from a second antenna element 532 spaced apart from the first antenna element 531 by a first separation distance D1 based on a preset separation direction, receiving 613 a third signal for a positioning signal from a third antenna element 533 spaced apart from the first antenna element 531 by a second separation distance D2 that is greater than the first separation distance D1 based on the separation direction and electrically separated from the second antenna element 532, identifying 620 a PDoA between at least some of the first signal, the second signal, and the third signal, and using the identified PDoA between the first signal and the second signal and the identified PDoA between the first signal and the third signal, measuring 630 an AoA with respect to a positioning target.

In an embodiment, the measuring 630 of the AoA may include, using a basic positioning algorithm A1 based on the first separation distance D1 and the identified PDoA between the first signal and the second signal, measuring 631 of an AoA with respect to a positioning target.

In an embodiment, the measuring 630 of the AoA may further include, when it is determined that the measured AoA falls within a preset correction angle range Rm, correcting 635 the measured AoA using a correction positioning algorithm A2 based on the second separation distance D2 and the identified PDoA between the first signal and the third signal.

In an embodiment, the correction angle range Rm may include a range of +60 degrees to +90 degrees and a range of -60 degrees to -90 degrees in the separation direction based on a reference direction which is a direction perpendicular to the separation direction.

In an embodiment, the measuring 630 of the AoA may include, using the identified PDoA between the first signal and the second signal and the identified PDoA between the first signal and the third signal, measuring 637 an AoA with respect to a positioning target. In an embodiment, the meta-positioning algorithm A4 may be formed by overlapping and scaling a positioning algorithm based on the first separation distance D1 and a positioning algorithm based on the second separation distance D2.

In an embodiment, an electronic device 501 may include a housing 510 including a first plate (e.g., the rear plate 311b of FIGS. 3B and 3C) facing a first direction, a second plate (e.g., the front plate 311a of FIGS. 3A and 3C) facing a second direction that is opposite to the first direction, and a side member (e.g., the side member 340 of FIGS. 3A, 3B, and 3C) surrounding a space between the first plate and the second plate and connecting one side of the first plate to one side of the second plate, a display (e.g., the display 361 of FIGS. 3A and 3C) visually exposed through at least a portion of the second plate, a substrate 520 including a first surface 521 facing the first direction and provided in the housing 510, and a plurality of antenna elements 530 connected to the substrate 520. In an embodiment, the plurality of antenna elements 530 may include a first antenna element 531, a second antenna element 532 spaced apart from the first antenna element 531 by a first separation distance D1 based on a third direction, which is a direction orthogonal to the first direction, and a third antenna element 533 spaced apart from the first antenna element 531 by a second separation distance D2 that is greater than the first separation distance D1 based on the third direction and electrically separated from the second antenna element 532.

In an embodiment, the first antenna element 531, the second antenna element 532, and the third antenna element 533 may be spaced apart from the first surface 521 of the substrate 520.

In an embodiment, the first antenna element 531, the second antenna element 532, and the third antenna element 533 may be arranged in a row in the third direction.

In an embodiment, the third antenna element 533 may be formed of a conductive member provided on the side member.

In an embodiment, each of the first antenna element 531, the second antenna element 532, and the third antenna element 533 may be formed of a conductive member spaced apart from the side member.

While embodiments have been illustrated and described, the disclosure is not limited to the aforementioned specific embodiments. Those skilled in the art should appreciate that various modifications may be made to the embodiments without departing from the subject matter of the disclosure as defined by the appended claims, and also that such modifications are not to be understood individually from the technical spirit or prospect of the disclosure.

## Claims

1. An electronic device (501) comprising:
a substrate (520) comprising a first surface (521) facing a first direction and a second surface (522) facing a second direction that is opposite to the first direction; and
a plurality of antenna elements (530) connected to the substrate (520),
wherein the plurality of antenna elements (530) comprises:
a first antenna element (531) disposed on the first surface (521) of the substrate (520);
a second antenna element (532) spaced apart from the first antenna element (531) by a first separation distance (D1) based on a third direction, which is a direction orthogonal to the first direction, and disposed on the first surface (521) of the substrate (520); and
a third antenna element (533) spaced apart from the first antenna element (531) by a second separation distance (D2) that is greater than the first separation distance (D1) based on the third direction and electrically separated from the second antenna element (532).

2. The electronic device (501) of claim 1, wherein the third antenna element (533) is disposed on the first surface (521) of the substrate (520).

3. The electronic device (501) of claim 1 or 2, wherein the first antenna element (531), the second antenna element (532), and the third antenna element (533) are arranged in a row in the third direction.

4. The electronic device (501) of any one of claims 1 to 3, further comprising:
a housing (510) comprising a first plate facing the first direction, a second plate facing the second direction, and a side member surrounding a space between the first plate and the second plate, connecting one side of the first plate to one side of the second plate, and configured to accommodate the substrate (520) therein,
wherein the third antenna element (533) is formed of a conductive member provided on the side member.

5. The electronic device (501) of any one of claims 1 to 4, further comprising:
a processor (120) configured to receive a signal from the plurality of antenna elements (530); and
memory (130) operatively connected to the processor (120) and storing executable instructions,
wherein the processor (120), by executing the instructions stored in the memory (130), is configured to:
using the plurality of antenna elements (530), receive a signal for a positioning signal; and
identify a phase difference of arriving signal (PDoA) between at least some of a first signal received from the first antenna element (531), a second signal received from the second antenna element (532), and a third signal received from the third antenna element (533).

6. The electronic device (501) of any one of claims 1 to 5, wherein the processor (120), by executing the instructions related to a basic positioning algorithm (A1) based on the first separation distance (D1) stored in the memory (130), is configured to, using the identified PDoA between the first signal and the second signal, measure an angle of arrival (AoA) with respect to a positioning target.

7. The electronic device (501) of any one of claims 1 to 6, wherein the processor (120), by executing the instructions related to a correction positioning algorithm (A2) based on the second separation distance (D2) stored in the memory (130) when the measured AoA falls within a preset correction angle range (Rm), is configured to, using the identified PDoA between the first signal and the third signal, correct the measured AoA.

8. The electronic device (501) of any one of claims 1 to 7, wherein the correction angle range (Rm) comprises:
a first correction range (R1) of 60 to 90 degrees in the third direction based on the first direction; and
a second correction range (R2) of 60 to 90 degrees in a fourth direction that is opposite to the third direction based on the first direction.

9. The electronic device (501) of any one of claims 1 to 8, wherein the processor (120), by executing the instructions related to a meta-positioning algorithm (A4) based on the first separation distance (D1) and the second separation distance (D2) stored in the memory (130), is configured to, using the identified PDoA between the first signal and the second signal and the identified PDoA between the first signal and the third signal, measure an AoA with respect to a positioning target.

10. The electronic device (501) of any one of claims 1 to 9, wherein the meta-positioning algorithm (A4) is formed by overlapping and scaling a positioning algorithm based on the first separation distance (D1) and a positioning algorithm based on the second separation distance (D2).

11. A method (600) implemented by a processor (120), the method (600) comprising:
receiving (611) a first signal for a positioning signal from a first antenna element (531);
receiving (612) a second signal for a positioning signal from a second antenna element (532) spaced apart from the first antenna element (531) by a first separation distance (D1) based on a preset separation direction;
receiving (613) a third signal for a positioning signal from a third antenna element (533) spaced apart from the first antenna element (531) by a second separation distance (D2) that is greater than the first separation distance (D1) based on the separation direction and electrically separated from the second antenna element (532);
identifying (620) a phase difference of arriving signal (PDoA) between at least some of the first signal, the second signal, and the third signal; and
using the identified PDoA between the first signal and the second signal and the identified PDoA between the first signal and the third signal, measuring (630) an angle of arrival (AoA) with respect to a positioning target.

12. The method (600) of claim 11, wherein the measuring (630) of the AoA comprises, using a basic positioning algorithm (A1) based on the first separation distance (D1) and the identified PDoA between the first signal and the second signal, measuring (631) of an AoA with respect to a positioning target.

13. The method (600) of claim 11 or 12, wherein the measuring (630) of the AoA further comprises:
when it is determined that the measured AoA falls within a preset correction angle range (Rm), correcting (635) the measured AoA using a correction positioning algorithm (A2) based on the second separation distance (D2) and the identified PDoA between the first signal and the third signal.

14. The method (600) of any one of claims 11 to 13, wherein the correction angle range (Rm) comprises a range of +60 degrees to +90 degrees and a range of -60 degrees to -90 degrees in the separation direction based on a reference direction which is a direction perpendicular to the separation direction.

15. The method (600) of any one of claims 11 to 14, wherein
wherein the measuring (630) of the AoA comprises, using the identified PDoA between the first signal and the second signal and the identified PDoA between the first signal and the third signal, measuring (637) an AoA with respect to a positioning target, and
wherein the meta-positioning algorithm (A4) is formed by overlapping and scaling a positioning algorithm based on the first separation distance (D1) and a positioning algorithm based on the second separation distance (D2).
